# EUROPÄISCHE PATENTSCHRIFT

(11) **EP 2 300 956 B1**
(45) Veröffentlichungstag und Bekanntmachung des Hinweises auf die Patenterteilung: **03.10.2018**
(21) Anmeldenummer: 09745431.8
(22) Anmeldetag: 16.02.2009
(51) Int. Cl.: G06F 21/32, G06F 21/34

(54) **VORRICHTUNG ZUR MOBILEN DATENVERARBEITUNG**
APPARATUS FOR MOBILE DATA PROCESSING
DISPOSITIF POUR LE TRAITEMENT MOBILE DE DONNÉES

(30) Priorität: 13.05.2008 DE 102008023245; 28.05.2008 DE 102008025660
(43) Veröffentlichungstag der Anmeldung: 30.03.2011
(73) Patentinhaber: Deutsche Telekom AG, 53113 Bonn (DE)
(72) Erfinder: UTERHARDT, Jörg, 15366 Hönow (DE); WARDIN, Thomas, 51469 Bergisch Gladbach (DE)
(74) Vertreter: 2K Patentanwälte Blasberg Kewitz & Reichel
(86) Internationale Anmeldenummer: PCT/DE2009/000213
(87) Internationale Veröffentlichungsnummer: WO 2009/138047

(56) Entgegenhaltungen:
- DE-A1-102004 044 454
- US-A1- 2004 123 113
- US-A1- 2006 242 423
- US-A1- 2007 223 685
- CACERES R ET AL: "Reincarnating PCs with portable SoulPads" MOBISYS. THE INTERNATIONAL CONFERENCE ON MOBILE SYSTEMS,APPLICATIONS AND SERVICES, XX, XX, 1. Juni 2005 (2005-06-01), Seiten 65-78, XP002413100

## Beschreibung

Die Vorrichtung betrifft ein Speichersystem mit Zusatzfunktionen, mit dem eine mobile Datenverarbeitung ermöglicht wird.

### Gebiet der Erfindung:

Das mobile Computing wird ein immer wichtigerer Faktor. Oftmals werden Daten mobil durch Speichersticks (wie USB-Flash-Speicher) von einem Rechner zum Anderen getragen. Während bisher immer die Verarbeitung unter Steuerung des Wirts-PC erfolgte, d.h. das Booten des Betriebssystems, und damit dessen Schwachstellen und die Angriffspotentiale eines USB-Sticks als kumulatives Sicherheitsrisiko anzusehen waren, soll ein Ansatz gewählt werden, der Autorisierungs- und Verarbeitungsprozess durch den Einsatz eines Speichersticks (wie USB-Stick) vereinfacht und eine höhere Sicherheit bietet.

Die Druckschrift US 2007/223685A1 offenbart eine Speicherkarte die verschlüsselbar ist.

Die Druckschrift US 2006/0242423 offenbart einen USB-Stick, der eine Signatur von Dokumenten oder als Schlüssel zum Verschließen von Komponenten dienen kann.

Die Druckschrift US 2004/0123113A1 offenbart ein tragbares Zugangsgerät, um auf gesicherte Endgeräte zuzugreifen.

Die Druckschrift "Reincarnating PCs with Portable Soul Pads" zeigt eine Festplatte, auf der ein Bootbares Betriebssystem installiert ist.

### Überblick über die Erfindung

Gelöst wird diese Aufgabe durch eine Erfindung mit den Merkmalen des unabhängigen Anspruchs.
Grundsätzlich ist der Key in allen Bereichen, die mit Anmelde- und Verarbeitungsprozessen bei der Nutzung von IT Technik zu tun haben, einsetzbar.
Die Kombination der Komponenten:
□ Login und Security, Firewall, Virenschutz und Kindersicherung
□ USB SLC-Flashspeicher >= 8 GB, vorzugsweise mit mehreren Partitionen
□ Integrierter WLAN Adapter
□ Integrierter Ethernet-Chip für Ethernet-Verbindung via RJ45
□ Biometrischer Fingerscanner
□ USB-Speicher, mit hardwaregestützter vorzugsweise 256-bit-AES- ad hoc Daten Verschlüsselung
   in einem System ist in dieser Form in der Lage, ein Höchstmaß an Sicherheit und Unabhängigkeit zu bieten

Die Vorrichtung ist personalisiert und kann somit die Hauptfunktionen wie
□ Authentifizierungsgerät
□ Lokaler Datenspeicher
□ Lokales Arbeitsumfeld (Betriebssystem, ausgewählte Anwendungsprogramme, wie z.B. MS Office, Lexika, Browser etc.) bereitstellen.
Der Zugang zum System und möglichen Internet- Plattformen erfolgt vorzugsweise über zwei Stufen: Das auf dem System gespeicherte Betriebssystem (wie Windows XP oder ähnliches) bootet selbstständig hoch. Bei der ersten Inbetriebnahme wird vorzugsweise ein personalisiertes Zertifikat vergeben und serverseitig mit dem Fingerscan verknüpft. Für jede einzelne Vorrichtung wird vorzugsweise ein Sicherheitszertifikat benötigt, um den Login-Vorgang via Fingerprint sicher zu machen. Alternative Ansätze sind denkbar, wie das Erzeugen eines lokalen Zertifikats
Bei allen folgenden Anmeldungen treten das Zertifikat und der Fingerscan des Nutzers anstelle der unsicheren und wenig komfortablen Anmeldung mit Benutzername und Passwort. Wenn der Benutzer jedoch wünscht sich in der bekannten Form mit Benutzername und Passwort anzumelden, so wird ihm dies ermöglicht.
Um die Bedienung so einfach wie möglich zu gestalten, wird die Vorrichtung vorzugsweise per einfachem USB-Kabel betrieben. Bei erhöhtem Energiebedarf kann ein USB- Y- Kabel zum Einsatz kommen. Falls die Stromstärke nicht ausreicht und nur eine USB- Schnittstelle zur Verfügung steht, wird optional ein USB-Hub mit externer Spannungsversorgung angeboten. Das Kabel kann in flexibler Form in das Gehäuse integriert werden. Des Weiteren zeigt eine integrierte LED den Status der Stromversorgung an (wenn die LED grün leuchtet, gibt es keine Probleme; leuchtet sie nicht, reicht die Stromversorgung durch den USB-Port nicht aus).

Ferner soll eine weitere LED mit rotem Licht den Status der Datenübertragung indizieren, um die Wahrscheinlichkeit einer eventueller Beschädigungen und Datenverluste durch falsche Handhabung zu verringern.
Es ist möglich künftig, einen SD-Karten Slot zu integrieren. Dahinter steht der Gedanke, in Zukunft auf SD-Karten vorinstallierte Daten anzubieten, die dann direkt nutzbar sind.

Gemäß den aktuellen Möglichkeiten der Technik soll die Vorrichtung in der ersten Geräte-Generation vorzugsweise 8GB Speicherkapazität in einem Layer aufweisen. Für eine lange Lebensdauer sollen momentan SLC-Flashchips verwendet werden. Neue Chipentwicklungen schließen jedoch eine höhere Kapazität und eine andere Technologie in Zukunft nicht aus. Die mögliche Verwendung einer zweiten Layer-PCB würde eine Verdoppelung der jeweiligen Kapazität ermöglichen. Vorerst sollten 8 GB Speicherplatz jedoch ausreichen.
Beim Gehäuse und bei Anschlüssen soll eine farbliche Kennzeichnung erfolgen, um Fehlbedienungen weitestmöglich auszuschließen.
Die W- LAN- Antenne soll in das Gehäuse integriert sein. Die Vorrichtung kann über eine geschützte Internetverbindung mit zusätzlicher Software ausgeschaltet werden. In einer für den Nutzer unzugänglichen Partition ist ein Sicherungsstand der lokalen Software (entsprechend dem Auslieferstand) vorhanden, der ein zurücksetzen der Vorrichtung durch Servicekräfte über das Netz ermöglicht.
In einer möglichen Ausführungsform handelt es sich um ein USB SSD mit biometrischem Fingerprint Sensor
▪ SSD mit min 8GB SLC NandFlash Chips partitioniert, gewährleistet eine hohe Zuverlässigkeit und Geschwindigkeit
▪ Vorinstalliertes Betriebssystem ermöglicht das Verwenden von weiteren Applikationen und das Booten vom USB SSD
▪ 10/100 base T Ethernet und 802.11a/b/g WLAN für die Anbindung an das Internet und Intranet
▪ USB Hub Controller - Voll Kompatibel zu USB2.0 highspeed
▪ USB Flash Disk Controller mit biometrischem Fingerprint Sensor
▪ E-Field Sweep type fingerprint sensor
▪ die Advanced Fingerprint Recognize technology ermöglicht das Einloggen in Internet- Plattformen mit einer sehr hohen Sicherheit und hohem Komfort.
▪ eindeutige Identifikation des Benutzers beim Einloggen
▪ Die möglichen Gehäuse Abmessungen sind,
   ▪ 95mm x 71.5mm x 15.5mm (H)
▪ PCB (Platinen) Größe
   ▪ 88.35mm x 65.00mm

Wobei diese keine Beschränkung darstellen.

Durch die Erfindung wird ein Höchstmaß an Sicherheit gegeben und der Wirts-PC bleibt in allen anfälligen Komponenten ungenutzt und damit gegenüber jeder Veränderung geschützt.

Mit der erfindungsgemäßen Vorrichtung werden gleichzeitig Anforderungen erfüllt, die bisher nicht bzw. nicht durch ein einziges Gerät erfüllbar waren:
- Sicherheit durch Kombination von (für den Nutzer nicht manipulierbar) Zertifikat und (nur dem Benutzer möglich) Fingerscan.
- Grtsunabhängigkeit durch Verwendbarkeit mit jedem beliebigen Wirts-PC, weil von diesem nur "neutrale" Einrichtungen, wie Arbeitsspeicher und Prozessor, Grafikkarte und Bildschirm, Tastatur und Maus, aber nicht lokale Laufwerke genutzt werden.
- leichter als ein Ultramobile-PC, daher "immer dabei"
- Konsistenz, Anwenderdaten in definiertem Umfang auf dem Key, Hintergrunddaten und weitere Anwendungen auf einer Internet-Plattform, dadurch immer und überall gleiche Arbeitsbedingungen

### Figurenbeschreibung:

Im Folgenden werden die Figuren beschrieben, die eine mögliche Ausführungsform darstellen. Es zeigt:
Fig. 1 die Anordnung der Komponenten und ihren Anschluss im System.
Fig. 2 das Äußere der Vorrichtung mit ihren Anschlüssen.

### Beschreibung von Ausführungsformen:

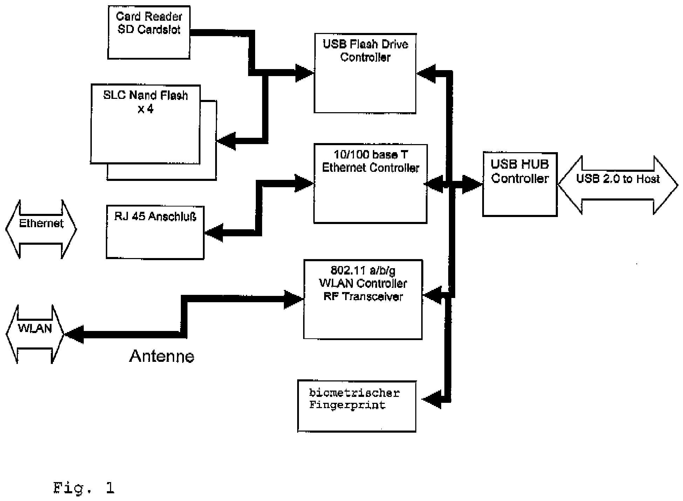

Die Figur 1 zeigt die einzelnen Komponenten der Vorrichtung und deren Anschluss. Ein zentraler USB-HUB ist in der Vorrichtung angeordnet, er führt die Kommunikation über den USB-Bus zum Rechner durch. Ein zweiter USB- Anschluss kann bei erhöhtem Energiebedarf zum Einsatz kommen, der hier nicht gesondert dargestellt wird. In einer nicht dargestellten Ausführungsform kann noch ein USB-HUB mit Stromversorgung vorgeschaltet werden, falls die Stromversorgung eines USB-Anschlusses nicht ausreicht. Der Controller für den dauerhaften Speicher, der Ethernet-Adapter und der WLAN-Adapter sind unmittelbar an den internen USB-HUB angeschlossen. Der Finger-Print-Sensor ist unmittelbar an den dauerhaften Speicher angeschlossen. Der Flash-Drive-Controller hat zusätzlich die Aufgabe, den Flashspeicher als Festplatte gegenüber dem Betriebssystem darzustellen. Die Netzwerkkontroller sind dann wiederum mit entsprechenden Anschlüssen verbunden.

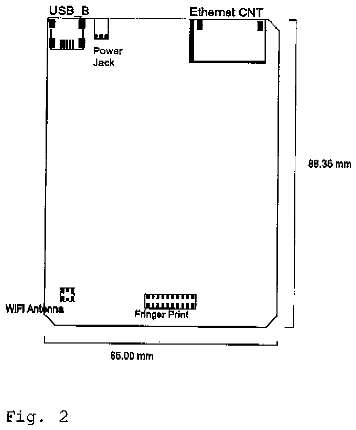

Die Figur 2 zeigt das Gehäuse mit möglichen Anschlüssen. Das Gehäuse weist einen USB Anschluss, einen Stromversorgungsanschluss, einen Finger-Print-Sensor und einen Ethernet-Anschluss auf. Die W- LAN- Antenne ist im Gehäuse integriert. Die Größe ist ca. 6,5 cm mal 9cm. Die Lage der LED- Kontrollanzeigen ist hier nicht dargestellt.

## Patentansprüche

1. Vorrichtung zur mobilen Datenverarbeitung, umfassend
- einen Anschluss für einen PC,
- einen Formfaktor der eine Mobilität in der Tasche erlaubt,
**gekennzeichnet durch**
- mindestens einen integrierten Netzwerkadapter, wobei der Netzwerkadapter ein WLAN-Adapter und/oder ein Ethernet-Adapter ist, der einen Zugang zum Internet ermöglicht;
- einen dauerhaften Speicher, auf dem ein vom dauerhaften Speicher bootbares Betriebssystem abgelegt ist, wobei der Speicher vorzugsweise als Flash ausgebildet ist; wobei der Anschluss für den PC so ausgebildet ist, dass dieser das Betriebssystem vom dauerhaften Speicher bootet, wobei der dauerhafte Speicher durch ein Hardwaresystem ver- und/oder entschlüsselt wird, wobei das Betriebssystem auf den integrierten Netzwerkadapter zugreift, um einen Zugang zum Internet zu ermöglichen.

2. Die Vorrichtung nach dem vorhergehenden Anspruch, wobei der Zugang über einen integrierten biometrischen Fingerscanner und/oder ein Passwort und/oder ein Software-Zertifikat erfolgt, wobei das Software-Zertifikat vorzugsweise personalisiert ist.

3. Die Vorrichtung nach dem vorhergehenden Anspruch, wobei ein integrierter Ethernet-Chip für Ethernet-Verbindung via RJ45 vorhanden ist.

4. Die Vorrichtung nach einem oder mehreren der vorhergehenden Ansprüche, wobei der Anschluss an den PC über USB erfolgt, und wobei auch die integrierten Komponenten, wie Netzwerkadapter, Fingerscanner über den USB mit dem PC verbunden sind.

5. Die Vorrichtung nach dem vorhergehenden Anspruch, wobei ein USB-Hub integriert ist.

6. Die Vorrichtung nach einem oder mehreren der vorhergehenden Ansprüche, wobei eine Firewall, Virenschutz und/oder Kindersicherung integriert sind.

7. Die Vorrichtung nach einem oder mehreren der vorhergehenden Ansprüche, wobei der dauerhafte Speicherbereich mit einer hardwaregestützten mindestens 256-bit Verschlüsselung versehen ist.

8. Die Vorrichtung nach einem oder mehreren der vorhergehenden Ansprüche, wobei der Zugang über zwei Stufen erfolgt: Zum Einen wird der Zugang über ein personalisiertes Softwarezertifikat und eine serverseitige Zuordnung des individuellen Fingerscans initialisiert, zum Anderen erfolgen spätere Anmeldungen auf Basis des Zertifikates und eines Abgleichs des dann übertragenen mit dem hinterlegten Fingerscan.

9. Die Vorrichtung nach einem oder mehreren der vorhergehenden Ansprüche, mit einer Größe, die kleiner als 20x20cm ist, vorzugsweise 9,5cm x 7,15cm x 1,5cm.

10. Die Vorrichtung nach einem oder mehreren der vorhergehenden Ansprüche, wobei der Vorrat an Daten und Anwendungsprogrammen über eine gesicherte Internetverbindung aktualisiert wird.

11. Die Vorrichtung nach einem oder mehreren der vorhergehenden Ansprüche, wobei der Auslieferungszustand durch Mittel, die ein entferntes einloggen zulassen, mit Hilfe eines Servicepersonals wiederherstellbar ist.

## Claims

1. Mobile data processing apparatus comprising
- A connector for a PC,
- A form factor that allows mobility in the pocket, **characterised by**
- At least one integrated network adapter, where the network adapter is a WLAN adapter and/or an Ethernet adapter that enables access to the Internet;
- A permanent memory on which an operating system bootable from said permanent memory is stored, said memory preferably being in the form of flash; said connector for said PC being adapted to boot said operating system from said permanent memory, said permanent memory being encrypted and/or decrypted by said hardware system, said operating system accessing said integrated network adapter to allow access to the Internet.

2. The device according to the previous claim, wherein the access is performed via an integrated biometric finger scanner and/or a password and/or a software certificate, the software certificate being preferably personalised.

3. The device according to the previous claim, comprising an integrated Ethernet chip for Ethernet connections via RJ45.

4. The device according to one or more of the previous claims, wherein the connection to the PC is performed via USB, and the integrated components such as network adapter, finger scanner are also connected to the PC via USB.

5. The device according to the previous claim, wherein an USB hub is integrated.

6. The device according to one or more of the previous claims, wherein a firewall, virus protection and/or parental control is integrated.

7. The device according to one or more of the preceding claims, wherein the permanent memory area being provided with hardware-based at least 256-bit encryption.

8. The device according to one or more of the preceding claims, wherein the access is provided via two stages: On the one hand, access is initialized via a personalized software certificate and a server-side assignment of the individual finger scan;
on the other hand, later registrations are made on the basis of the certificate and a comparison of the finger scan then transferred with the stored finger scan.

9. The device according to one or more of the preceding claims, with a size smaller than 20x20cm, preferably 9,5cm x 7,15cm x 1,5cm.

10. The device according to one or more of the preceding claims, wherein the stock of data and application programs is updated via a secure Internet connection .

11. The device according to one or more of the preceding claims, wherein the state of delivery being recoverable by means allowing remote login with the assistance of a service staff.

## Revendications

1. Un dispositif mobile de traitement de données comprenant
- un connecteur pour un PC,
- un facteur de forme permettant une mobilité à l'intérieur d'une poche, **caractérisé par** :
- au moins un adaptateur de réseau intégré, dans lequel l'adaptateur de réseau intégré est un adaptateur WLAN et/ou un adaptateur Ethernet permettant un accès au réseau Internet ;
- une mémoire permanente sur laquelle est stockée un système d'exploitation pouvant être démarré à partir de la mémoire permanente, ladite mémoire permanente étant de préférence conçue sous forme de mémoire flash; ledit connecteur pour ledit PC étant adapté pour démarrer ledit système d'exploitation à partir de la mémoire permanente, ladite mémoire permanente étant chiffrée et/ou déchiffrée par ledit système matériel, ledit système d'exploitation accédant audit adaptateur de réseau intégré pour permettre un accès au réseau Internet.

2. Le dispositif selon la revendication précédente, dans lequel l'accès est réalisé via un lecteur d'empreintes digitales biométrique intégré et/ou un mot de passe et/ou un certificat de logiciel, le certificat de logiciel étant de préférence personnalisé.

3. Le dispositif selon la revendication précédente, comportant un circuit intégré Ethernet pour des connexions Ethernet via RJ45.

4. Le dispositif selon une ou plusieurs revendications précédentes, dans lequel la connexion au PC est réalisée via un port USB, les composants intégrés tels que l'adaptateur de réseau, le lecteur d'empreintes digitales sont également connectés au PC via le port USB.

5. Le dispositif selon la revendication précédente, dans lequel est intégré un concentrateur USB.

6. Le dispositif selon l'une ou plusieurs des revendications précédentes, dans lequel sont intégrés un pare-feu, une protection antivirale et/ou un contrôle parental.

7. Le dispositif selon l'une ou plusieurs des revendications précédentes, dans lequel la mémoire permanente est dotée d'un cryptage basé sur un cryptage matériel d'au moins 256 bits.

8. Le dispositif selon l'une ou plusieurs des revendications précédentes, dans lequel l'accès se déroule en deux étapes:
d'une part, l'accès est initialisé via un certificat logiciel personnalisé et une affectation côté serveur de la lecture d'empreintes digitale ;
d'autre part, des enregistrements ultérieurs sont effectués sur la base du certificat et d'une comparaison de l'empreinte digitale, transférée ultérieurement avec l'empreinte digitale.

9. Le dispositif selon l'une ou plusieurs des revendications précédentes, ayant une dimension inférieure à 20 × 20 cm, et de préférence de 9,5 cm × 7,15 cm × 1,5 cm

10. Le dispositif selon l'une ou plusieurs des revendications précédentes, dans lequel les données et les programmes d'application sont mis à jour via une connexion Internet sécurisée.

11. Le dispositif selon l'une ou plusieurs des revendications précédentes, dans lequel, dans le statut de la livraison est récupérable par des moyens permettant une connexion distante avec l'assistance d'un personnel de service.
